# FASCICULE DE BREVET EUROPEEN

(11) **EP 1 633 988 B1**
(45) Date de publication et mention de la délivrance du brevet: **13.09.2006**
(21) Numéro de dépôt: 04742887.5
(22) Date de dépôt: 15.06.2004
(51) Int. Cl.: F15C 5/00

(54) **MICROVANNE FLUIDIQUE A OUVERTURE PAR COMMANDE ELECTRIQUE**
MIKROFLUIDVENTIL MIT ELEKTRISCHER ÖFFNUNGSSTEUERUNG
ELECTRICALLY-OPENED MICRO FLUID-VALVE

(30) Priorité: 16.06.2003 FR 0307222
(43) Date de publication de la demande: 15.03.2006
(73) Titulaire: BIOMERIEUX, 69280 Marcy-L'Etoile (FR); SNPE Matériaux Energétiques, 75004 Paris (FR)
(72) Inventeur: BROYER, Patrick, F-01700 Beynost (FR); COLIN, Bruno, F-6928 Marcy L'Etoile (FR); ROLLER, Denis, F-91590 La Ferte Alais (FR)
(86) Numéro de dépôt international: PCT/FR2004/050223
(87) Numéro de publication internationale: WO 2004/113735

(56) Documents cités:
- WO-A-01/02737
- WO-A-01/17797
- WO-A-99/01688
- WO-A-02/088551
- US-A- 5 346 372
- US-A1- 2002 195 579
- US-B1- 6 679 279

## Description

Le domaine technique de la présente invention est celui des microvannes. Plus particulièrement, la présente invention concerne une microvanne fluidique à ouverture par commande électrique, destinée à être utilisée dans des microsystèmes.

Les microvannes sont des microactionneurs de plus en plus utilisés au sein de microcircuits fluidiques dans des microsystèmes, pour des applications diverses et notamment biomédicales, comme par exemple dans les cartes d'analyses ; mais également dans le domaine de la synthèse chimique, avec les microréacteurs.

Dans le domaine biomédical, différents types de microvannes ont été décrits. Un premier type concerne des microvannes utilisant l'effet pyrotechnique. Une telle vanne est décrite par exemple dans le document WO-A-98/22719. Il s'agit d'une vanne miniature pour le remplissage du réservoir d'un appareil d'administration transdermique. Le principe de fonctionnement de cette vanne repose sur la fragmentation d'un substrat provoquée par les gaz de combustion d'une charge pyrotechnique, ledit substrat séparant initialement une réserve de fluide et un réservoir vide. Cette microvanne peut, selon une autre variante de réalisation, être utilisée avec une enveloppe gonflable. Les gaz de combustion provoquent d'abord la rupture du substrat puis le gonflement de l'enveloppe dans le but de pousser un fluide afin de l'évacuer.

Ces microvannes présentent comme principal inconvénient d'émettre des fragments de substrat dans le microcircuit.

Le document WO-A-98/22738 décrit un dispositif d'injection intraveineuse comportant un deuxième type de microvannes. Ces microvannes sont disposées le long d'un circuit linéaire de distribution des liquides de perfusion, dans un boîtier et comprennent essentiellement un siège et un élément de fermeture de la vanne réalisé dans un matériau thermofusible, qui fond au contact d'un élément électrique de chauffage, afin d'assurer l'ouverture ou la fermeture de la vanne.

Si de telles vannes sont adaptées au dispositif d'injection décrit dans le présent document, elles comportent des inconvénients majeurs qui les empêchent d'être appliquées à un dispositif planaire de type microsystème, dans lequel le circuit fluidique est disposé dans un espace confiné. En effet, dans la microvanne décrite dans le document WO-A-98/22738, l'élément de fermeture est positionné perpendiculairement à la direction du flux. Ainsi, dans le cas d'une vanne à ouverture, lorsque cet élément est chauffé, il se divise en deux lèvres qui viennent pivoter de façon à se retrouver dans le sens du flux, n'entravant nullement ce dernier. Dans un microsystème dans lequel les microvannes sont placées dans la zone en "U" parallèlement à la direction du flux, une telle vanne entraverait fortement le flux.

Un autre inconvénient tient au fait que des vannes présentant une telle structure sont sujettes à la rétention de liquide après leur ouverture. Il en résulte donc la présence d'un volume mort non négligeable qui constitue un inconvénient majeur dans une application de type microsystème. En effet, le volume de liquide circulant dans un tel dispositif étant d'amblé très faible, la présence d'un volume mort trop important nuit au bon fonctionnement de ce dispositif.

Le document WO-A-02/065005 décrit un microdispositif multicouche utilisant un bilame et un matériau élastomère du type PolyDiMéthylSiloxane (PDMS) dans lequel est ouvert un canal. Lorsque la tension est appliquée sur le bilame, celui-ci se déforme est vient écraser les parois souples du canal, créant l'occlusion de celui-ci.

L'inconvénient majeur de ce dispositif réside dans la complexité de construction (nombre important de couches), la nécessité d'avoir une élévation de température non négligeable dans le bilame pour obtenir la fermeture du canal. Par ailleurs, le niveau de tenue en étanchéité dans le temps doit également être assez faible.

Il s'avère par ailleurs que le PDMS n'est pas un matériau très adapté au flux de liquide dans des microsystèmes pour des applications biologiques. En effet, son caractère très hydrophobe entraîne une possibilité de formation de bulles dans le circuit microfluidique. Sa mise en oeuvre industrielle est difficile (coulage). Il présente un fort pouvoir d' adsorption des protéines.

Le document US-B-6,382,254 décrit une vanne microfluidique permettant de contrôler le flux d'un liquide à travers un canal. Le fonctionnement de la vanne est basé sur l'utilisation de liquide (type Poly(éthylène-oxyde)) dont la viscosité augmente fortement avec la température (le liquide passe à l'état de gel).

Ce dispositif comporte l'inconvénient d'avoir à mélanger le liquide transporté avec le liquide activateur (problème de compatibilité, mise en oeuvre difficile), d'avoir à intégrer un liquide dans un espace confiné dans le microdispositif (si le liquide activateur n'est pas mélangé au liquide transporté) et donc des problèmes de remplissage qui en découlent. Ce dispositif présente également l'inconvénient majeur d'avoir à chauffer le liquide et/ou le dispositif jusqu'à 50°C, ce qui est peu compatible avec des réactions biologiques à des températures contrôlées et éventuellement avec des réactifs ne supportant pas de telles élévations de température, notamment les enzymes.

Une autre vanne est décrite par exemple dans le document US 5346372. Il ressort de cette revue de l'art antérieur qu'il n'existe pas de microvannes fluidiques à commande électrique, adaptées à une mise en oeuvre dans un espace confiné, en particulier dans un microsystème, qui puisse être facilement produit industriellement et intégré au procédé de fabrication du microsystème ; dont le fonctionnement est compatible avec la mise en oeuvre de réactions biologiques; qui présente de bonnes qualités d'étanchéité lorsqu'elle est à l'état fermé et qui, une fois à l'état ouvert, ne constitue pas un obstacle à l'écoulement du flux ; et dont le volume mort perdu dans la vanne est négligeable au regard des volumes transportés dans le microsystème.

Un premier objectif de la présente invention est donc de fournir une microvanne fluidique à ouverture pouvant, être réalisée dans un espace confiné, en particulier dans un microsystème.

Un second objectif de la présente invention est de fournir une microvanne qui se doit d'être facilement réalisable au cours d'un procédé de production industriel de microsystèmes.

Un troisième objectif de la présente invention est de fournir une microvanne qui se doit également de faire preuve d'une grande fiabilité, notamment en assurant une bonne étanchéité à l'état fermé et un bon écoulement du liquide à l'état ouvert, en évitant d'entraver le flux.

Un quatrième objectif de la présente invention est de fournir une microvanne présentant une architecture telle qu'il soit possible de facilement disposer plusieurs microvannes, en série ou en parallèle, dans un microcircuit au sein d'un microsystème.

Enfin, un dernier objectif de la présente invention est de fournir une microvanne qui présente un coût de revient réduit.

Ces objectifs parmi d'autres sont atteints par la présente invention qui concerne une microvanne fluidique à ouverture par commande électrique, qui comporte :
- au moins un support plan ;
- au moins un microcanal afférent ;
- au moins un microcanal efférent ;
lesdits microcanaux étant ménagés dans le support, de façon à ce qu'au moins une de leurs extrémités débouche sur la face interne dudit support, au voisinage l'une de l'autre ;
- au moins un dépôt d'un matériau thermosensible disposé sur la face interne du support ; et
- au moins un moyen d'échauffement ;
de sorte que le dépôt de matériau thermosensible obture au moins en partie l'espace séparant les extrémités des microcanaux, empêchant ainsi ces derniers de communiquer entre eux ;
l'augmentation de température du moyen d'échauffement entraînant une modification de la structure du matériau thermosensible, dégageant ainsi au moins partiellement les extrémités des microcanaux et l'espace entre ces dernières, afin de permettre la communication entre lesdits microcanaux et restaurer l'écoulement du fluide.

De façon préférentielle, la microvanne selon l'invention comporte en outre au moins une couche de revêtement solidaire du support,

Selon un premier mode de réalisation de la microvanne, le matériau thermosensible est un matériau thermofusible.

De façon particulière, ce matériau thermofusible peut être un matériau polymère. A titre de deuxième mode de réalisation, ce matériau thermofusible peut également être une colle thermofusible.

Selon un troisième mode de réalisation de la microvanne selon l'invention, le matériau thermosensible est un matériau thermoexpansable.

Selon un quatrième mode de réalisation de la microvanne selon l'invention, le matériau thermosensible est un matériau thermoretractable. Par matériau thermorétractable, on entend la propriété que possède certains matériaux de se retirer ou de se contracter lorsqu'on les place à proximité d'une source de chaleur.

De façon particulière, le matériau thermorectractable est pris dans le groupe comprenant les thermoplastiques élastomères tels que les copolymères bloc de PE et de PolyButadiène (PB) ou PI ; les PE irradiés.

Selon un cinquième mode de réalisation de la microvanne selon l'invention, le matériau thermosensible est une composition pyrotechnique.

De façon particulière, la composition pyrotechnique est une composition à base de nitrocellulose.

Selon une autre caractéristique remarquable, le moyen d'échauffement comprend au moins une piste conductrice, comportant des zones conductrices et au moins une zone préférentielle d'échauffement, éventuellement au moins en partie en contact avec le dépôt de matériau thermosensible.

Avantageusement, l'augmentation de température de la zone préférentielle d'échauffement est obtenue par l'application d'un courant électrique à la piste conductrice.

La zone préférentielle d'échauffement est constituée par un dépôt d'un matériau résistif.

A titre de variante, la zone préférentielle d'échauffement peut également être une zone de restriction de la section de la piste conductrice.

De façon avantageuse, le dépôt de matériau thermoexpansable est réalisé dans un puits ménagé sur la face interne du support.

Selon une autre variante avantageuse de l'invention, la couche de revêtement comporte un évidement disposé dans le prolongement des extrémités des microcanaux.

Préférentiellement, la microvanne selon l'invention comporte en outre un moyen d'évacuation des gaz. Ce moyen est avantageusement un évent.

Un autre objet de l'invention concerne un procédé de fabrication d'une microvanne qui comprend les étapes suivantes :
a) la fabrication du support plan, comportant au moins un microcanal afférent et au moins un microcanal efférent ;
b) le dépôt du matériau thermosensible, par solidarisation d'un film sur la face interne du support plan, de façon à obturer les extrémités desdits microcanaux ;
c) le dépôt d'au moins une piste conductrice, comportant au moins une zone préférentielle d'échauffement au moins en partie sur ledit dépôt de matériau thermosensible ;
les étapes b) et c) pouvant être inversées.

Préférentiellement, le procédé selon l'invention comporte en outre une étape de dépôt d'une couche de revêtement par solidarisation d'un film au support plan.

De façon tout à fait avantageuse, les films constituant la couche matériau thermosensible et la couche de revêtement sont solidarisés au support plan par laminage à chaud ou à froid, par collage à l'aide d'une colle thermofusible.

Selon une autre caractéristique avantageuse, le dépôt de la piste conductrice est réalisé :
- par photogravure des zones conductrices puis sérigraphie ou tampographie de la zone préférentielle d'échauffement ; ou
- par photolithographie des zones conductrices et de la zone préférentielle d'échauffement.

Un autre objet de l'invention concerne un microsystème qui comprend au moins une microvanne.

Un autre objet de l'invention concerne un procédé d'ouverture d'une microvanne telle que décrite supra, qui comprend les étapes suivantes :
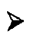 l'application d'un courant électrique dans au moins un piste conductrice comportant une zone préférentielle d'échauffement ;
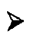 l'augmentation de la température de la zone préférentielle d'échauffement ;
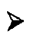 la modification de la structure du matériau thermosensible en contact avec zone préférentielle d'échauffement ;
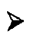 le dégagement au moins partiel des extrémités des microcanaux et de l'espace entre ces dernières, de manière à établir la communication entre lesdits microcanaux ; et
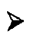 la mise en place de l'écoulement du fluide.

La présente invention sera mieux comprise à la lumière de la description détaillée qui suit, faite en référence aux dessins dans lesquels :
Les figures 1A, 1B et 1C représentent des vues en coupe axiale longitudinale d'une microvanne selon un premier mode de réalisation, respectivement en position fermée et ouverte, dans laquelle le matériau thermosensible est un matériau polymère thermofusible.
Les figures 2A et 2B représentent des vues en coupe axiale longitudinale dune microvanne selon un deuxième mode de réalisation, variante du premier mode de réalisation, respectivement en position fermée et ouverte, dans laquelle le matériau thermosensible est une colle thermofusible.
Les figures 3A et 3B représentent des vues en coupe axiale longitudinale d'une microvanne selon un troisième mode de réalisation, respectivement en position fermée et ouverte, dans laquelle le matériau thermosensible est un matériau thermoexpansable.
Les figures 4A et 4B représentent des vues en coupe axiale longitudinale d'une microvanne selon un quatrième mode de réalisation, respectivement en position fermée et ouverte, dans laquelle le matériau thermosensible est un matériau thermorétractable.
Les figures 5A et 5B représentent des vues en coupe axiale longitudinale d'une microvanne selon un cinquième mode de réalisation, respectivement en position fermée et ouverte, dans laquelle le matériau thermosensible est un matériau pyrotechnique.

Comme on peut le voir sur la figure IA, la microvanne 10 selon l'invention présente une structure laminaire multicouche. Une première couche constitue le support plan 12. Ce support peut être avantageusement en PolyCarbonate (PC), en PolyPropylène (PP), en Polystyrène (PS), en Acrylonitryle Butadiène Styrène (ABS), les Cyclo-oléfines Cycliques (CoC), le PolyEther Ether Ketone (PEEK), le PolyMéthylMéthAcrylate (PMMA) ou tout support polymère compatible avec la température de fusion du matériau thermosensible. L'épaisseur de ce support est avantageusement comprise entre 0,2 et 3 mm. Dans ce support en polycarbonate, sont aménagés un microcanal afférent 14, qui amène le fluide jusqu'à la microvanne, et un microcanal efférent 16 qui reçoit le fluide, une fois la vanne ouverte ; les microcanaux 14 et 16 faisant partie d'un microcircuit fluidique. Ces microcanaux présentent une section transversale, préférentiellement circulaire, de diamètre compris entre 0,01 et 3 mm. Les extrémité 141 et 161 des microcanaux 14 et 16 respectivement, débouchent à la surface interne 121 du support 12.

Le support 12 et les microcanaux 14 et 16 sont préférentiellement obtenus par un procédé d'injection classique. Toutefois, tout procédé équivalent tel que la microreplication ("hot embossing", microinjection) ou les procédés de gravure/perçage/découpage au laser peuvent également être utilisés.

Le support 12 est en contact avec une couche 18 d'un matériau thermosensible. Ce matériau thermosensible est, en l'espèce, un matériau thermofusible pris dans le groupe comprenant le PP, le PET, le PolyEthylène Naphtalate (PEN) sous forme de film monocouche ou multicouches type PP/PET, scellé sur le support 12. Ce film peut être soit scellé par laminage sans colle (thermocompression). Alternativement, le film peut être scellé par laminage dit « Hot Melt », c'est à dire avec une face enduite d'une colle thermofusible. Une face du film ou la face 121 du support peut également être enduit d'une colle photoactivable, UV réticulable ou sensible à la pression de type silicone. Enfin le film peut être scellé par soudage Haute Fréquence, ultrasons, vibrations ou laser en contourage ou par masque, des extrémités 141 et 161 des microcanaux 14 et 16.

Il ressort donc de cette structure que les microcanaux 14 et 16 sont obturés par la couche 18 et ne communiquent donc pas l'un avec l'autre. L'épaisseur de la couche 18 est comprise entre 0,005 et 0,3 mm.

Sous ladite couche 18, est déposée une piste conductrice 20. Cette piste comporte une zone préférentielle d'échauffement 201, délimitée par deux zones conductrices 202 et 203. La zone préférentielle d'échauffement 201 est située à la verticale de la zone constituée par les extrémités 141 et 161 des microcanaux 14 et 16 et l'espace séparant les extrémités. Cette zone 201 peut être indifféremment une piste résistive ou une zone au niveau de laquelle la section de piste est restreinte, de sorte que lorsque qu'un courant est délivré dans la piste conductrice, la température au niveau de la zone 201 augmente fortement. La piste conductrice 20 est préférentiellement à base de cuivre ou d'aluminium. Il peut s'agir également d'une encre conductrice à base de carbone. Lorsque la zone d'échauffement 201 est une zone résistive, cette dernière est préférentiellement obtenue par dépôt d'une encre résistive, ayant une résistance de l'ordre de 100 ohms. Une telle encre peut être par exemple l'encre Carbon Conductive Ink SD 2841 HAL-IR, commercialisée par PETERS.

Cette piste conductrice est réalisée par photogravure des zones conductrices 202 et 203, puis sérigraphie ou tampographie de la zone préférentielle d'échauffement 201. Selon un mode alternatif, cette piste conductrice peut être entièrement réalisée par photolithographie.

Enfin, la microvanne comporte une couche 22 également en matériau polymère, du type polystyrène (PS), polyimide (PI), PC, PET, PE, PMMA, PEEK, CoC ; le PC et le PE étant préférés. La piste conductrice 20 est réalisée sur la face interne 221 de la couche 22, par sérigraphie, tampographie, photolithographie, photogravure ou tout autre procédé permettant de réaliser des pistes conductrices sur un film ou un substrat polymère. L'épaisseur de la couche 22 est préférentiellement comprise entre 0,2 et 2 mm. La couche 18 est fixée à la couche 22 par tout moyen approprié, et notamment par collage, thermosoudage, soudage à ultrasons, Haute Fréquence, thermocompression, laminage sous pression à chaud ou à froid. La couche 22 peut également être réalisée en surmoulage par injection sur la couche 18.

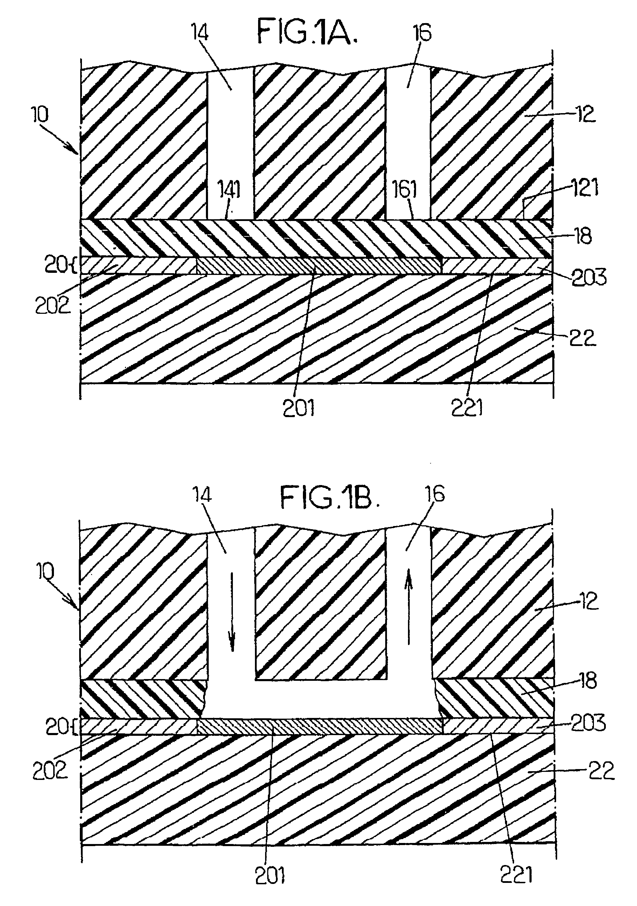

Le principe de fonctionnement de l'ouverture de la microvanne 10 est le suivant. La piste conductrice 20 est reliée à un générateur de courant par tout moyen approprié. Une impulsion de tension est délivrée dans la piste conductrice, durant un temps t. Cette tension peut avoir par exemple une tension de 9V et peut être comprise entre 5 et 30 V. La température dans la zone d'échauffement 201 s'élève jusqu'à atteindre la température de fusion (Tf) du matériau constituant la couche 18. La couche 18 dans la zone située au-dessus de la zone 201 fond, dégageant par la même un volume délimité par les extrémités 141 et 161 des microcanaux 14 et 16, tel que représenté sur la figure 1B. Il s'ensuit que la communication entre les microcanaux 14 et 16 est établie, activant l'écoulement du fluide du microcanal 14 vers le microcanal 16, tel que le montre les flèches sur la figure 1B.

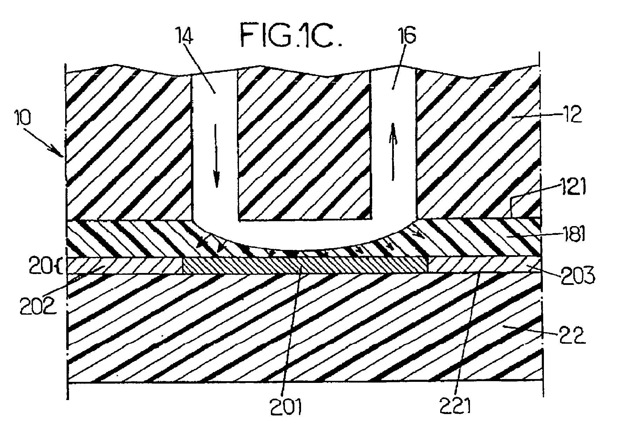

Tel que représenté sur la figure 1C, la couche 181 peut également être constituée d'un matériau qui présente une température de transition vitreuse (Tg) proche de la température atteinte par la zone 201, de telle sorte que lorsque la température d'échauffement atteint la température de transition vitreuse (Tg), le matériau va fluer sous l'action de la température. Ce fluage entraîne une déformation de la couche 181, qui peut se caractériser par un retrait selon les flèches, un vrillage ou un gauchissement. Cette déformation entraîne le descellement de la couche 181 tout le long de la surface de contact avec la zone 201, et donc la libération des extrémités 141 et 161 des microcanaux 14 et 16 et de l'espace entre ces extrémités. En effet, il suffit d'obtenir un espacement entre la couche 181 et le support 12 compris entre 10 et 20 µm pour que la communication entre les microcanaux 14 et 16 soit établie et que le liquide puisse être déplacé sans perte de charge significative.

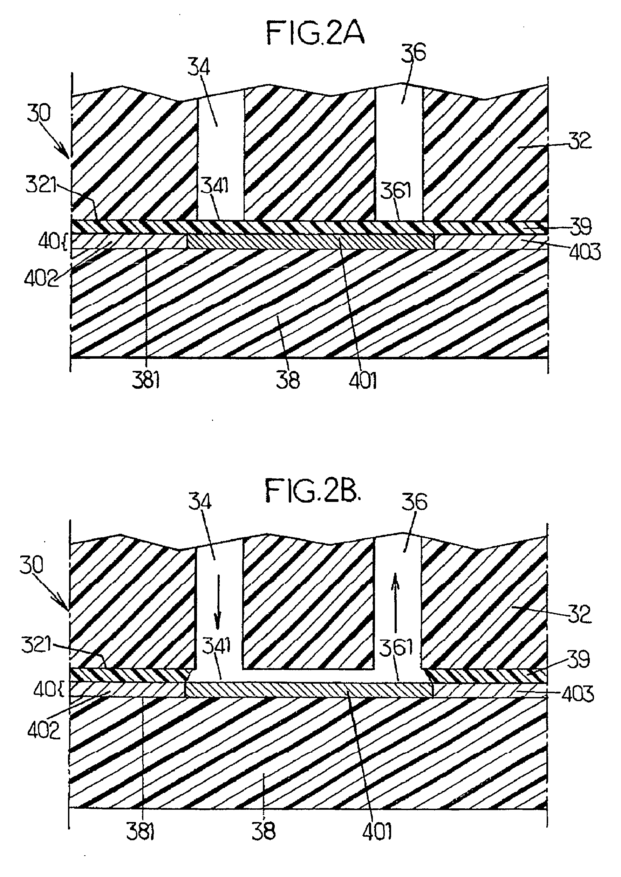

A titre de variante du premier mode de réalisation, la figure 2A représente un deuxième mode de réalisation de la microvanne selon l'invention. La microvanne 30 comporte un support plan 32, équivalent au support plan 12, dans lequel sont aménagés les canaux afférent 34 et efférent 36, dont les extrémités 341 et 342 respectivement affleurent la face interne 321 du support 32.

Une couche 38 en matériau polymère, similaire à la couche 22 décrite dans le première mode de réalisation, est solidarisée au support 32 au moyen d'une couche 39 de colle thermofusible dite "hot-melt", par laminage à chaud. Cette solidarisation peut se faire également au moyen d'un film de colle transfert double- face, préférentiellement sans âme, de type TESA® T256 ou 7156 ou encore 3M® F 9460 PC. Il ressort de cette structure que les microcanaux 34 et 36 sont obturés par la couche 38, qui vient les sceller au moyen de la couche de colle "hot-melt".

Une piste conductrice 40 est réalisée sur la face interne 381 de la couche 38. Comme dans le cas du premier mode de réalisation de la microvanne selon l'invention, cette piste conductrice est réalisée par photogravure, puis sérigraphie ou tampographic, ou par lithographie. Conformément à la piste conductrice 20 décrit dans le premier mode de réalisation, la piste conductrice 40 comporte également une zone préférentielle d'échauffement 401, délimitée par des zones conductrices 402 et 403, au niveau de laquelle la température est plus élevée, lors du passage d'un courant dans la piste conductrice.

Il ressort de cette structure que les microcanaux 34 et 36 sont obturés par la couche 39, qui vient les sceller.

Le principe de fonctionnement de l'ouverture de la microvanne selon ce deuxième mode réalisation est le suivant. La piste conductrice 40 est mise sous tension. La température dans la zone 401 augmente jusqu'à ce qu'elle atteigne la température de fusion de la colle constituant la couche 40 scellant les extrémités 341 et 361 des microcanaux 34 et 36 et plus généralement solidarisant la couche polymère 38 au support 32. Il s'ensuit que la colle "hot-melt" va fondre à nouveau sur une zone en contact avec la zone 401 et fluée par capillarité notamment dans les angles de la zone qui a fondu. La fusion de la colle libère alors un volume entre les extrémités 341 et 361 des microcanaux 34 et 36, permettant auxdits microcanaux de pouvoir communiquer entre eux, tel que représenté sur la figure 2B. Le flux du liquide se fait alors du microcanal 34 vers le microcanal 36, dans le sens de flèches représentées sur la figure 2B. L'écoulement du flux peut être amélioré par le fait que le matériau constituant la couche 38 est ramolli grâce à la chaleur dégagée par la zone 401.

Si le volume libéré par la fusion de la colle "hot-melt", dans le mode de réalisation représenté aux figures 2A et 2B, est moins important que celui libéré par la fusion de la couche polymère 18, dans le mode de réalisation représenté aux figures 1A et 1B, il est toutefois suffisant pour permettre le bon écoulement du liquide contenu dans le microcircuit, en amont de la microvanne.

Selon une première variante (non représentée) de ce deuxième mode de réalisation, la microvanne selon l'invention comporte une couche en matériau polymère solidarisée au support 32 au moyen de la couche de colle 39, de façon équivalente à la couche 18 décrite dans le premier mode de réalisation. Cette couche est constituée d'un matériau polymère thermosensible, mais dont la température de fusion est significativement plus élevée que celle du matériau utilisé pour réaliser la couche 18, du premier mode de réalisation. Ce polymère peut être par exemple le PET, le PEN, le PI (Kapton®), une résine FR4 ou le PolyTetraFluoroEthylène (PTFE - Téflon®).

La couche polymère 38 est ensuite solidarisée à la couche en matériau polymère par le moyen décrit supra, dans le cas du premier mode de réalisation de la microvanne selon l'invention.

Avantageusement, la couche 38 peut comprendre un évidement sur sa face interne 381, ménagé de telle sorte qu'il soit situé sous la zone 401 et de dimension équivalente. Ainsi, la fusion de la colle "hot-melt" entraîne le décollement de la couche an matériau polymère. Cette dernière étant avantageusement réalisée dans un matériau qui ramollit lorsque la température de la zone 401 augmente, elle vient se positionner dans l'évidement aménagé dans la couche 38, de sorte que l'espace la séparant du support 32 est plus important et permet ainsi un meilleur écoulement du flux entre les microcanaux 34 et 36. Selon cette variante, la piste conductrice 40 est préférentiellement réalisée sur la face inférieure de la couche en matériau polymère, par photogravure, sérigraphie, lithographie ou tampographie.

A titre de seconde variante de ce deuxième mode de réalisation qui constitue en fait une sous-variante de la première variante décrite ci-dessus, la microvanne selon l'invention ne comporte pas de couche 38. Dans cette configuration, la piste conductrice 40 est préférentiellement en contact avec la couche de colle conductrice 39 et est supportée par la couche en matériau polymère ajoutée dans la première variante. En d'autres termes, cette couche en matériau polymère se substitue à la couche 38 en jouant le rôle de support de la piste conductrice 40.

La figure 3A représente un troisième mode de réalisation de la microvanne fluidique à ouverture selon l'invention. La microvanne 50 selon ce troisième mode de réalisation, présente une structure similaire à celles décrite pour les premier et deuxième modes de réalisation. Elle se compose d'un support plan 52 de constitution similaire à ceux décrits supra. Ce support comporte un microcanal afférent 54 et un microcanal efférent 56, dont les extrémités 541 et 561 affleurent la surface interne 521 du support 52. Il comporte en outre un puits 58 réalisé entre les deux microcanaux. Ce puits 58 est réalisé simultanément aux microcanaux 54 et 56 lors de la fabrication du support 52. Il peut présenter par exemple une section transversale circulaire, de diamètre inférieure au diamètre de la section transversale des microcanaux. Ce puits 58 est rempli d'un dépôt 60 d'un matériau thermosensible ayant un fort coefficient de dilatation. Un tel matériau peut être un polymère, une résine, une gomme, une cire ou des microsphères contenant un hydrocarbure tel que l'isopropane ou l'isobutane mélangé ou pas avec une matrice polymère ou en gel. (Microsphères Expancel® ; Expancel)

La microvanne 50 comporte en outre une couche 62 dans un matériau polymère. Ce matériau est avantageusement thermosensible et du type de celui utilisé dans le deuxième mode de réalisation et décrit supra. Cette couche 62 est solidarisée au support 52 par tout moyen approprié tel que le collage, le thermosoudage par pression à chaud, ou tout autre procédé équivalent, de telle sorte qu'elle obture l'extrémité 541 et 561 des microcanaux 54 et 56. Lorsque la couche 62 est solidarisée au support 52 par collage ou thermosoudage, il peut être avantageusement disposé sur la face supérieure de la couche 62, un dépôt de colle "hot-melt", afin d'améliorer le collage.

Sur la face inférieure de la couche 62, est déposée une piste conductrice 64. Conformément aux premier et deuxième modes de réalisation de la microvanne selon l'invention, cette piste conductrice est réalisée par sérigraphie ou lithographie. Elle comporte une zone préférentielle d'échauffement 641, délimitée par les zones conductrices 642 et 643, similaires à celles décrites supra.

Enfin, la microvanne comprend une couche inférieure 66 en matériau polymère, de structure similaire à celle des couches 22 et 38 décrites dans les premier et deuxième modes de réalisation. La couche 66 comporte en outre sur sa face interne 661, un évidement 68, sensiblement disposé de telle sorte que, lorsque la couche 66 est solidarisée à la couche 62, l'évidement 68 est superposé à la zone d'échauffement 641. Enfin, un évent 69 est aménagé dans la couche 66 perpendiculaire à l'évidement 68 et permet la communication entre ce dernier et l'extérieur de la microvanne.

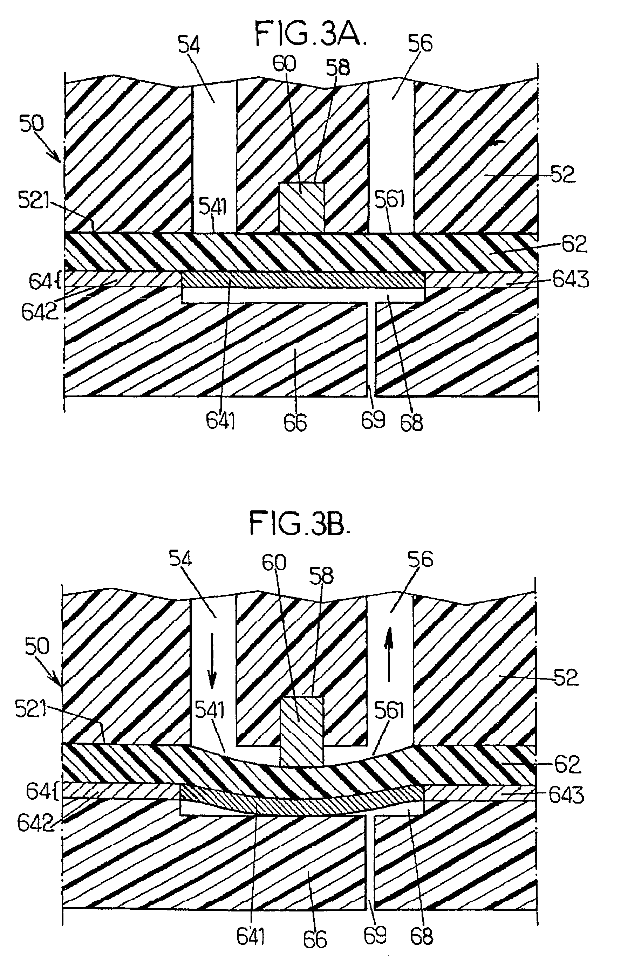

Pour comprendre le fonctionnement de la microvanne à ouverture 50, on se réfère aux figures 3A et 3B. La piste 64 est mise sous tension. Cette mise sous tension entraîne une augmentation de la température dans la zone d'échauffement 641. Cette augmentation de la température provoque la dilatation du matériau thermosensible 60, dans le sens longitudinal. Le matériau 60 dilaté vient faire pression sur la couche 62 et entraîne la déformation et le décollement de cette dernière dans une zone située entre les extrémités 541 et 561 des microcanaux 54 et 56. Le décollement est accentué par la présence de l'évidement 68, qui joue le rôle de niche et vient recevoir la portion de la couche 62 déformée par le matériau 60. La couche 62 fait alors pression sur 1'air contenu dans l'évidemment 68. Cet air est alors évacué par l'évent 69. La communication entre les microcanaux 54 et 56 est ainsi établie et permet l'écoulement du fluide initialement emprisonné dans le microcanal 54, vers le microcanal 56, dans le sens des flèches représentées sur la figure 3B. La section transversale du matériau 60 étant limitée, une fois la communication entre les microcanaux 54 et 56 établie, l'écoulement du fluide se fait horizontalement de part et d'autre du matériau, ce dernier ne gênant en rien l'écoulement du fluide.

Une variante de ce troisième mode de réalisation peut consister à emprisonner dans le puits 58 un liquide ou un gel, à la place du matériau thermoexpansable. Le liquide/gel doit être doué de la faculté de changement d'état de liquide à gaz, lorsqu'il est soumis à quantité de chaleur déterminée. Un tel liquide peut être avantageusement un hydrocarbure du type isobutane ou isopropane, du fréon. D'autres fluides également utilisables, pris seuls ou en mélange, sont des CFC ou équivalent. Ainsi, il peut être avantageux d'utiliser le réfrigérant Rll, dont les propriétés thermodynamiques sont présentées dans le tableau ci dessous :

| T(°C) | ρ_{ν} (kg/m³) | ρ_{L} (kg/m³) | pᵥ (bar) | L (kJ/kg) | k_{L} (W/m/°K) |
|---|---|---|---|---|---|
| 7 | 3,2 | 1518 | 0,54 | 188 | 0,093 |
| 27 | 6,5 | 1471 | 1,134 | 181 | 0,087 |
| 47 | 11,8 | 1420 | 2,16 | 173 | 0,081 |
| 67 | 20 | 1371 I | 3,76 | 164 | 0,076 |

Le liquide/gel est maintenu prisonnier dans le puits 60, grâce à la couche 62 qui vient sceller ce dernier. Lorsque le courant passe dans la piste conductrice et entraîne l'échauffement de la zone 641, l'augmentation de température au niveau de cette zone entraîne la changement de d'état du liquide contenu dans le puits 60. Le gaz exerce alors une pression importante sur la couche 62, entraînant la déformation et le décollement de celle-ci, la portion décollée prenant place dans l'évidement 68 de la couche 66, prévu à cet effet.

Dans le cas de cette variante, il peut être avantageux de prévoir un évent dans le support 52, sous la forme d'une canalisation reliée au microcanal 56 et permettant d'évacuer le gaz produit, de façon à ce que celui-ci ne fasse pas opposition à la circulation du fluide entre du microcanal 54 vers le microcanal 56.

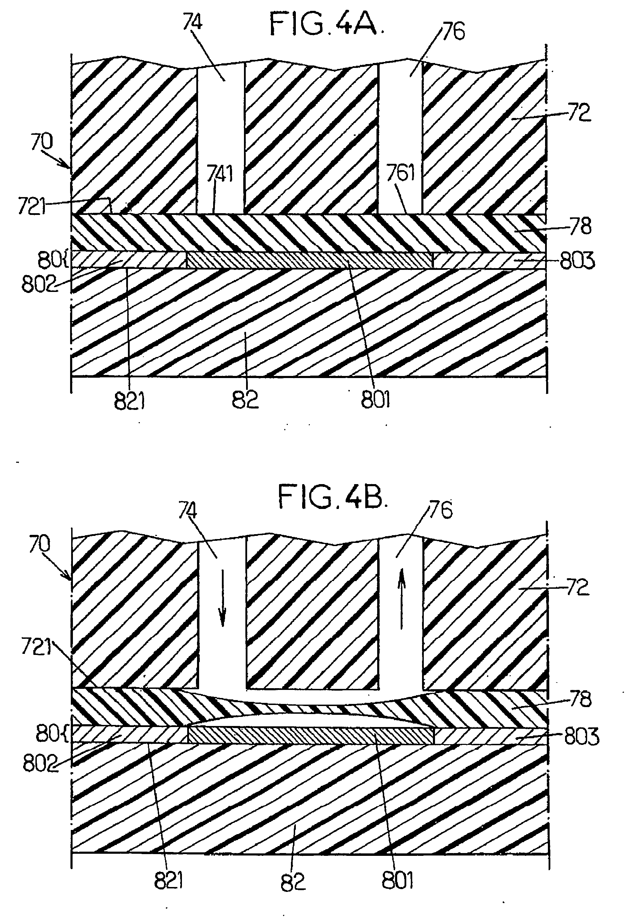

Une quatrième mode de réalisation de la microvanne fluidique à ouverture selon l'invention est basé sur l'utilisation d'une composition pyrotechnique. Une telle microvanne est représentée sur les figures 4A et 4B. Cette microvanne 70 comporte un support 72, similaire aux supports 12, 32 et 52 décrit dans les modes de réalisations précédents. Ce support 72 comporte un microcanal afférent 74 et un microcanal efférent 76, dont les extrémités 741 et 761 affleurent la surface interne 721 du support 72.

Le support 72 est en contact avec une couche 78 d'un matériau thermosensible. Ce matériau thermosensible est, en l'espèce, un matériau thermorétractable. Cette couche 78 se présente sous la forme d'un film collé, laminé ou surmoulé à la surface du support 72. La couche 78 vient donc obturer les extrémités 741 et 761 des microcanaux 74 et 76.

Conformément aux modes de réalisations décrits supra, la microvanne comporte une piste conductrice 80 comportant une zone préférentielle d'échauffement 801 délimitée par deux zones conductrices 802 et 803. La piste conductrice est avantageusement réalisée sur la face interne 821 de la couche polymère 82, équivalente aux couches 22, 38 et 66.

La microvanne 70 s'ouvre de la façon suivante : la piste conductrice 80 est mise sous tension. La zone d'échauffement 801 voit sa température augmenter jusqu'à atteindre la température de rétractation du matériau constituant la couche 78. Il s'ensuit donc que ce matériau va se rétracter dans sa partie située en regard de la zone d'échauffement 801, libérant ainsi les extrémités 741 et 761 des microcanaux 74 et 76. L'écoulement du fluide du microcanal 74 vers le microcanal 76 est alors rétabli.

Une variante avantageuse de ce quatrième mode de réalisation consiste à disposer la piste conductrice 80 au contact du support 72, entre les extrémités 741 et 761 des microcanaux 74 et 76, de façon à pouvoir optimiser la rétractation du matériau constituant la couche 78 entre les deux canaux 74 et 76.

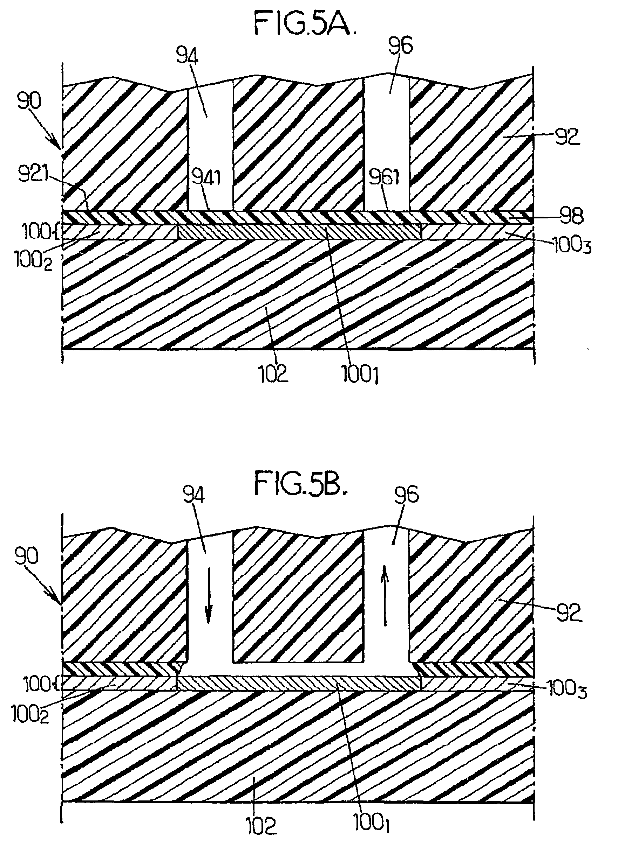

Un cinquième mode de réalisation de la microvanne fluidique à ouverture selon l'invention est basé sur l'utilisation d'une composition pyrotechnique. Une telle microvanne est représentée sur les figures 5A et 5B. Cette microvanne 90 comporte un support 92, similaire aux supports 12, 32, 52 et 72 décrit dans les modes de réalisations précédents. Ce support 92 comporte un microcanal afférent 94 et un microcanal efférent 96, dont les extrémités 941 et 961 affleurent la surface interne 921 du support 92

Sur la face interne 921 du support 92, est déposée une couche 98 d'une composition pyrotechnique se présentant préférentiellement sous la forme d'un vernis. Cette composition pyrotechnique peut par exemple être à base de nitrocellulose.

Dans le mode de réalisation illustré aux figures 5A et 5B, la couche 98 est déposée uniformément sur toute la surface du support par sérigraphie, pulvérisation, dispense de gouttes, tampographie dans une zone limitée comprise entre les deux extrémités des microcanaux.

Une piste conductrice 100 est réalisée tel que décrit supra. Cette piste comporte une zone préférentielle d'échauffement 100₁, délimitée par deux zones conductrices 100₂ et 100₃.

Selon une variante de ce mode de réalisation, la piste conductrice 100 peut être déposée sur la face interne 921 du support 92, préalablement à la couche de composition pyrotechnique.

Enfin, une couche 102 en polymère et similaire aux couches 22, 38, 66 et 82 décrites supra est solidarisée au support 92. La couche de composition pyrotechnique peut avantageusement jouer le rôle de colle pour améliorer le scellement des microcanaux 94 et 96. Après dépôt de la couche de composition pyrotechnique sur la face interne 721 du support 72, la couche polymère 102 portant la piste conductrice 100, peut être assemblée par collage (pression à chaud ou collage double face).

Le mode de fonctionnement de la microvanne à ouverture 90 est le suivant. Un courant électrique est délivré dans la piste conductrice 100, induisant une augmentation de température dans la zone d'échauffement 100₁, jusqu'à atteindre la température d'initiation de la composition pyrotechnique. Tel que représenté sur la figure 5B, la combustion de la composition pyrotechnique entraîne le dégagement de l'extrémité 941 et 961 des microcanaux 94 et 96, ce qui permet d'établir la communication fluidique entre ces microcanaux et d'induire l'écoulement du fluide, dans le sens des flèches.

Selon une variante de ce mode de réalisation, il peut être avantageux de prévoir un évent dans le support 92 lié au microcanal 96, sous la forme d'une canalisation permettant d'évacuer les gaz produits lors de la combustion de la composition pyrotechnique, de façon à ce que ces gaz ne fassent pas opposition à la circulation du fluide entre du microcanal 94 vers le microcanal 96.

Les microvannes fluidiques à ouverture selon l'invention sont destinées à être utilisées dans des microsystèmes comportant des microcircuits fluidiques. La microstructure multicouche de ces microvannes est particulièrement adaptée à son intégration dans un microsystème, au cours d'un procédé industriel. En effet, les microsystèmes fluidiques tel que les cartes d'analyses dans le domaine biomédical sont généralement constitués d'une structure multicouches. La fabrication de la microvanne selon l'invention peut donc être complètement intégrée à la fabrication du microsystème, avec un nombre d'étapes complémentaires, propres à la conception de la microvanne, très limité ; une grande partie des couches constituants la microvanne, notamment le support (12, 32, 52, 72), la couche polymère (18, 38, 62) et la couche inférieure (22, 42, 66 et 82) étant constitutives du microsystème.

Un autre avantage de cette microstructure est qu'elle permet la réalisation d'un grand nombre de microvannes dans une espace très confiné, en série ou en parallèle sur le microcircuit fluidique, les microvannes pouvant être très proches les unes des autres. En effet, la structure multicouches permet de réaliser plusieurs microvannes simultanément en utilisant des films qui sont déposés en pleine plaque par le biais de procédés industriels connus de l'homme du métier et maîtrisés, pour réaliser les couches.

Un dernier avantage de la microvanne fluidique selon l'invention est de présenter des caractéristiques d'étanchéité très bonnes. En effet, la qualité de l'étanchéité de la microvanne est amenée par le scellage par les moyens connus des films d'operculage (laminage, dépôt de film avec colle thermofusible, etc...). Il n'est pas nécessaire de réaliser un dépôt de matériau au niveau des extrémités des microcanaux où doivent être placées les vannes (temps de cycle long, erreur de dépôt, défaut lors de la solidification du produit fusible pouvant entraîner une fuite,...). Dans le cadre de l'invention, les films sont déposés en pleine plaque de manière industrielle, par les procédés conventionnels, ce qui permet d'obtenir une grande robustesse de fermeture des vannes.

## Revendications

1. Microvanne fluidique à ouverture par commande électrique, comportant :
- au moins un support plan (12, 32, 52, 72, 92) ;
- au moins un microcanal afférent (14, 34, 54, 74, 94) ;
- au moins un microcanal efférent (16, 36, 56, 76, 96) ;
lesdits microcanaux étant ménagés dans le support, de façon à ce qu'au moins une de leurs extrémités (141, 341, 541, 741, 941) et (161, 361, 561, 761, 961) débouche sur la face interne (121, 321, 521, 721, 921) dudit support (12, 32, 52, 72, 92), au voisinage l'une de l'autre ;
- au moins un dépôt (18, 39, 62, 78, 98) d'un matériau thermosensible disposé sur la face interne (121, 321, 521, 721, 921) du support (12, 32, 52, 72, 92), ; et
- au moins un moyen d'échauffement (20, 40, 64, 80, 100) ;
de sorte que le dépôt (18, 39, 62, 78, 98) de matériau thermosensible obture au moins en partie l'espace séparant les extrémités (141, 341, 541, 741, 941) et (161, 361, 561, 761, 961) des microcanaux (14, 34, 54, 74, 94) et (16, 36, 56, 76, 96), empêchant ainsi ces derniers de communiquer entre eux ;
l'augmentation de température du moyen d'échauffement (20, 40, 64, 80, 100) entraînant une modification de la structure du matériau thermosensible, dégageant ainsi au moins partiellement les extrémités des microcanaux et l'espace entre ces dernières, afin de permettre la communication entre lesdits microcanaux et restaurer l'écoulement du fluide.

2. Microvanne selon la revendication 1, **caractérisée en ce qu'**elle comporte en outre au moins une couche de revêtement (22, 38, 66, 82, 102) solidaire du support (12, 32, 52, 72, 92).

3. Microvanne selon la revendication 1 ou 2, **caractérisée en ce que** le matériau thermosensible est un matériau thermofusible.

4. Microvanne selon la revendication précédente, **caractérisé en ce que** le matériau thermofusible est pris dans le groupe comprenant les matériaux polymères thermofusibles ou les colles thermofusibles.

5. Microvanne selon la revendication 1 ou 2, **caractérisé en ce que** le matériau thermosensible est un matériau thermoexpansable.

6. Microvanne selon la revendication 1 ou 2, **caractérisé en ce que** le matériau thermosensible est un matériau thermorétractable.

7. Microvanne selon la revendication 1 ou 2, **caractérisée en ce que** le matériau thermosensible est une composition pyrotechnique.

8. Microvanne selon la revendication précédente, **caractérisée en ce que** la composition pyrotechnique est une composition à base de nitrocellulose.

9. Microvanne selon l'une des revendications précédentes, **caractérisée en ce que** le moyen d'échauffement comprend au moins une piste conductrice (20, 40, 64, 80, 100), comportant des zones conductrices (202, 402, 642, 802, 100₂), (203, 403, 643, 803, 100₃) et au moins une zone préférentielle d'échauffement (201, 401, 641, 801, 100₁), éventuellement au moins en partie en contact avec le dépôt (18, 40, 62, 78, 98) de matériau thermosensible.

10. Microvanne selon la revendication 9, **caractérisée en ce que** l'augmentation de température de la zone préférentielle d'échauffement (201, 401, 641, 801, 100₁) est obtenue par l'application d'un courant électrique à la piste conductrice (20, 40, 64, 80, 100).

11. Microvanne selon l'une des revendications 9 et 10, **caractérisé en ce que** la zone préférentielle d'échauffement (201, 401, 641, 801, 100₁) est constituée par un dépôt d'un matériau résistif.

12. Microvanne selon l'une des revendications 9 à 11, **caractérisé en ce que** la zone préférentielle d'échauffement (201, 401, 641, 801, 100₁) est une zone de restriction de la section de la piste conductrice.

13. Microvanne selon l'une des revendications 5 à 12, **caractérisée en ce que** le dépôt de matériau thermoexpansable (60) est réalisé dans un puits (58) ménagé sur la face intei-ne (521) du support (52).

14. Microvanne selon l'une des revendications 2 à 13, **caractérisée en ce que** la couche de revêtement (66) comporte un évidement (68) disposé dans le prolongement des extrémités (541) et (561) des microcanaux (54) et (56).

15. Microvanne selon l'une des revendications précédentes, **caractérisée en ce qu'**elle comporte en outre un moyen d'évacuation des gaz.

16. Procédé de fabrication d'une microvanne selon l'une des revendications 1 à 15, **caractérisé en ce qu'**il comprend les étapes suivantes :
a) fabrication du support plan (12, 32, 52, 72, 92), comportant au moins un microcanal afférent (14, 34, 54, 74, 94) et au moins un microcanal efférent (16, 36,56,76,96);
b) dépôt du matériau thermosensible (18, 40, 62, 78), par solidarisation d'un film sur la face interne (121, 321, 521, 721, 921) du support (12, 32, 52, 72, 92), de façon à obturer les extrémités (141, 341, 541, 741, 941) et (161, 361, 561, 761, 961) desdits microcanaux (14, 34, 54, 74, 94) et (16, 36, 56, 76, 96) ;
c) dépôt d'au moins une piste conductrice (20, 40, 64, 80, 100), comportant au moins une zone préférentielle d'échauffement (201, 401, 641, 801, 100₁) au moins en partie sur ledit dépôt (18, 40, 62, 78, 98) de matériau thermosensible ;
les étapes b) et c) pouvant être inversées.

17. Procédé selon la revendication précédente, **caractérisé en ce qu'**il comporte en outre une étape de dépôt d'une couche de revêtement (22, 42, 66, 82, 102) par solidarisation d'un film au support plan (12, 32, 52, 72, 92).

18. Procédé selon la revendication 16 ou 17, **caractérisé en ce que** les films constituant la couche de matériau thermosensible (18, 40, 62, 78, 98) et la couche de revêtement (22, 42, 66, 82, 102) sont solidarisées au support plan (12, 32, 52, 72, 92) par laminage à chaud ou à froid, par collage à l'aide d'une colle thermofusible.

19. Procédé selon l'une des revendications 16 à 18, **caractérisé en ce que** le dépôt de la piste conductrice est réalisée :
• par photogravure des zones conductrices et sérigraphie ou tampographie de la zone préférentielle d'échauffement; ou
• par photolithographie des zones conductrices et de la zone préférentielle d'échauffement.

20. Microsystème **caractérisé en ce qu'**il comprend au moins une microvanne selon l'une des revendications 1 à 15 ou obtenue à partir du procédé selon les revendications 16 à 19.

21. Procédé d'ouverture d'une microvanne selon l'une des revendications 1 à 15, **caractérisé en ce qu'**il comprend les étapes suivantes :
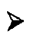 application d'un courant électrique dans au moins un piste conductrice comportant une zone préférentielle d'échauffement ;
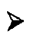 augmentation de la température de la zone préférentielle d'échauffement ;
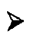 modification de la structure du matériau thermosensible en contact avec la zone préférentielle d'échauffement ;
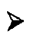 dégagement au moins partiel des extrémités des microcanaux et de l'espace entre ces dernières, de manière à établir la communication entre lesdits microcanaux ; et
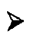 mise en place de l'écoulement du fluide.

## Claims

1. An electrically openable microfluidic valve comprising :
- at least one plane support (12, 32, 52, 72, 92);
- at least one afferent microchannel (14, 34, 54, 74, 94);
- at least one efferent microchannel (16, 36, 56, 76, 96);
said microchannels being provided in the support, so that at least one of their ends (141, 341, 541, 741, 941) and (161, 361, 561, 761, 961) opens onto the internal face (121, 321, 521, 721, 921) of said support (12, 32, 52, 72, 92), near one another;
- at least one deposit (18, 39, 62, 78, 98) of a heat-sensitive material laid out on the internal face (121, 321, 521, 721, 921) of the support (12, 32, 52, 72, 92); and
- at least one heating means (20, 40, 64, 80, 100) ;
so that the deposit (18, 39, 62, 78, 98) of heat-sensitive material at least partly closes off the space separating the ends (141, 341, 541, 741, 941) and (161, 361, 561, 761, 961) of the microchannels (14, 34, 54, 74, 94) and (16, 36, 56, 76, 96), thus preventing the latter from communicating with one another; the increase in temperature by the heating means (20, 40, 64, 80, 100) resulting in a modification of the structure of the heat-sensitive material, thus at least partially clearing the ends of the microchannels and the space between the latter, so as to allow communication between said microchannels and to restore flow of the fluid.

2. The microfluidic valve as claimed in claim 1, **characterized in that** it further includes at least one coating layer (22, 38, 66, 82, 102) bonded to the support (12, 32, 52, 72, 92).

3. The microfluidic valve as claimed in claim 1 or 2, **characterized in that** the heat-sensitive material is a thermofusible material.

4. The microfluidic valve as claimed in the preceding claim, **characterized in that** the thermoplastic material is taken from the group comprising thermofusible polymers and thermofusible or hot-melt adhesives.

5. The microfluidic valve as claimed in claim 1 or 2, **characterized in that** the heat-sensitive material is a heat-expandable material.

6. The microfluidic valve as claimed in claim 1 or 2, **characterized in that** the heat-sensitive material is a heat-shrinkable material.

7. The microfluidic valve as claimed in claim 1 or 2, **characterized in that** the heat-sensitive material is a pyrotechnic composition.

8. The microfluidic valve as claimed in the preceding claim, **characterized in that** the pyrotechnic composition is a nitrocellulose-based composition.

9. The microfluidic valve as claimed in one of the preceding claims, **characterized in that** the heating means comprises at least one conducting track (20, 40, 64, 80, 100), having conducting zones (202, 402, 642, 802, 100₂), (203, 403, 643, 803, 100₃) and at least one preferential heating zone (201, 401, 641, 801, 100₁), optionally at least partly in contact with the deposit (18, 40, 62, 78, 98) of heat-sensitive material.

10. The microfluidic valve as claimed in claim 9, **characterized in that** the increase in temperature of the preferential heating zone (201, 401, 641, 801, 100₁) is obtained by applying an electric current to the conducting track (20, 40, 64, 80, 100).

11. The microfluidic valve as claimed in either of claims 9 and 10, **characterized in that** the preferential heating zone (201, 401, 641, 801, 100₁) is formed by a deposit of a resistive material.

12. The microfluidic valve as claimed in one of claims 9 to 11, **characterized in that** the preferential heating zone (201, 401, 641, 801, 100₁) is a heating zone of restricted cross section of the conducting track.

13. The microfluidic valve as claimed in one of claims 5 to 12, **characterized in that** the heat-expandable material (60) is deposited in a well (58) made on the internal face (521) of the support (52).

14. The microfluidic valve as claimed in one of claims 2 to 13, **characterized in that** the coating layer (66) includes a recess (68) lying in the extension of the ends (541) and (562) of the microchannels (54) and (56).

15. The microfluidic valve as claimed in one of the preceding claims, **characterized in that** it further includes a gas evacuation means.

16. A process for fabricating a microfluidic valve as claimed in one of claims 1 to 15, **characterized in that** it comprises the following steps:
a) fabrication of the plane support (12, 32, 52, 72, 92), which includes at least one afferent microchannel (14, 34, 54, 74, 94) and at least one efferent microchannel (16, 36, 56, 76, 96);
b) deposition of the heat-sensitive material (18, 40, 62, 78) by bonding a film to the internal face (121, 321, 521, 721, 921) of the support (12, 32, 52, 72, 92) so as to close off the ends (141, 341, 541, 741, 941) and (161, 361, 561, 761, 961) of said microchannels (14, 34, 54, 74, 94) and (16, 36, 56, 76, 96); and
c) deposition of at least one conducting track (20, 40, 64, 80, 100), which includes at least one preferential heating zone (201, 401, 641, 801, 100₁) at least partly on said deposit (18, 40, 62, 78, 98) of heat-sensitive material,
it being possible for steps b) and c) to be reversed.

17. The process as claimed in the preceding claim, **characterized in that** it further includes a step of depositing a coating layer (22, 42, 66, 82, 102) by bonding a film to the plane support (12, 32, 52, 72, 92).

18. The process as claimed in either of claims 16 and 17, **characterized in that** the films constituting the deposit (18, 40, 62, 78, 98) of heat-sensitive material and the coating layer (22, 42, 66, 82, 102) are bonded to the plane support (12, 32, 52, 72, 92) by hot or cold lamination, or by bonding using a hot-melt adhesive.

19. The process as claimed in one of claims 16 to 18, **characterized in that** the conducting track is deposited:
• by photoetching of the conducting zones and screenprinting or pressure-pad printing of the preferential heating zone; or
• by photolithography of the conducting zones and of the preferential heating zone.

20. A microsystem **characterized in that** it comprises at least one microfluidic valve as claimed in one of claims 1 to 15 or obtained from the process as claimed in claims 16 to 19.

21. A method of opening a microfluidic valve as claimed in one of claims 1 to 15, **characterized in that** it comprises the following steps:
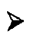 application of an electric current in at least one conducting track having a preferential heating zone;
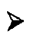 increase in the temperature of the preferential heating zone;
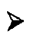 modification of the structure of the heat-sensitive material in contact with the preferential heating zone;
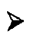 at least partial clearing of the ends of the microchannels and of the space between the latter, so as to establish communication between said microchannels; and
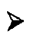 restoration of the fluid flow.

## Patentansprüche

1. Fluidtechnisches Mikroventil mit Öffnen durch elektrische Steuerung, das Folgendes aufweist:
- mindestens einen ebenen Träger (12, 32, 52, 72, 92),
- mindestens einen zugehenden Mikrokanal (14, 34, 54, 74, 94),
- mindestens einen abgehenden Mikrokanal (16, 36, 56, 76, 96),
wobei die Mikrokanäle in dem Träger eingerichtet sind, so dass mindestens eines ihrer Enden (141, 341, 541, 741, 941) und (161, 361, 561, 761, 961) auf der Innenseite (121, 321, 521, 721, 921) des Trägers (12, 32, 52, 72, 92) in der Nähe voneinander mündet,
- mindestens eine Ablagerung (18, 39, 62, 78, 98) eines wärmeempfindlichen Werkstoffs, der auf der Innenseite (121, 321, 521, 721, 921) des Trägers (12, 32, 52, 72, 92) aufgetragen ist, und
- mindestens ein Erwärmungsmittel (20, 40, 64, 80, 100),
so dass die Ablagerung (18, 39, 62, 78, 98) aus wärmeempfindlichem Werkstoff mindestens einen Teil des Raums verschließt, der die Enden (141, 341, 54 1, 741, 941) und (161, 361, 561, 761, 961) der Mikrokanäle (14, 34, 54, 74, 94) und (16, 36, 56, 76, 96) trennt, so dass diese Letzteren am Kommunizieren miteinander gehindert werden,
wobei die Erhöhung der Temperatur des Erwärmungsmittels (20, 40, 64, 80, 100) eine Änderung der Struktur des wärmeempfindlichen Werkstoffs nach sich zieht, so dass die Enden der Mikrokanäle und der Raum zwischen diesen Letzteren zumindest teilweise freigelegt werden, um die Kommunikation zwischen den Mikrokanälen zu erlauben und das Fließen des Fluids wiederherzustellen.

2. Mikroventil nach Anspruch 1, **dadurch gekennzeichnet, dass** es ferner mindestens eine Beschichtungsschicht (22, 38, 66, 82, 102) aufweist, die fest mit dem Träger (12, 32, 52, 72, 92) verbunden ist.

3. Mikroventil nach Anspruch 1 oder 2, **dadurch gekennzeichnet, dass** der wärmeempfindliche Werkstoff ein wärmeschmelzender Werkstoff ist.

4. Mikroventil nach dem vorhergehenden Anspruch, **dadurch gekennzeichnet, dass** der wärmeschmelzende Werkstoff aus der Gruppe genommen wird, die die wärmeschmelzbaren Polymerwerkstoffe oder die wärmeschmelzbaren Klebstoffe enthält.

5. Mikroventil nach Anspruch 1 oder 2, **dadurch gekennzeichnet, dass** der wärmeempfindliche Werkstoff ein wärmedehnbarer Werkstoff ist.

6. Mikroventil nach Anspruch 1 oder 2, **dadurch gekennzeichnet, dass** der wärmeempfindliche Werkstoff ein wärmeschrumpfender Werkstoff ist.

7. Mikroventil nach Anspruch 1 oder 2, **dadurch gekennzeichnet, dass** der wärmeempfindliche Werkstoff eine pyrotechnische Zusammensetzung ist.

8. Mikroventil nach dem vorhergehenden Anspruch, **dadurch gekennzeichnet, dass** die pyrotechnische Zusammensetzung eine Zusammensetzung auf Nitrozellulosebasis ist.

9. Mikroventil nach einem der vorhergehenden Ansprüche, **dadurch gekennzeichnet, dass** das Erwärmungsmittel mindestens eine leitende Piste (20, 40, 64, 80, 100) aufweist, die leitende Zonen (202, 402, 642, 802, 100₂), (203, 403, 643, 803, 100₃) und mindestens eine bevorzugte Erwärmungszone (201, 401, 641, 801, 100₁) aufweist, die gegebenenfalls mindestens zum Teil mit der Ablagerung (18, 40, 62, 78, 98) aus wärmeempfindlichem Werkstoff in Berührung ist.

10. Mikroventil nach Anspruch 9, **dadurch gekennzeichnet, dass** die Temperaturerhöhung der bevorzugten Erwärmungszone (201, 401, 641, 801, 100₁) durch Anlegen eines elektrischen Stroms an die leitende Piste (20, 40, 64, 80, 100) erzielt wird.

11. Mikroventil nach einem der Ansprüche 9 und 10, **dadurch gekennzeichnet, dass** die bevorzugte Erwärmungszone (201, 401, 641, 801, 100₁) aus einer Ablagerung eines resistiven Werkstoffs besteht.

12. Mikroventil nach einem der Ansprüche 9 bis 11, **dadurch gekennzeichnet, dass** die bevorzugte Erwärmungszone (201, 401, 641, 801, 100₁) eine Drosselzone des Querschnitts der leitenden Piste ist.

13. Mikroventil nach einem der Ansprüche 5 bis 12, **dadurch gekennzeichnet, dass** die Ablagerung aus wärmedehnbarem Werkstoff (60) in einer Vertiefung (58) hergestellt ist, die auf der Innenfläche (521) des Trägers (52) eingerichtet ist.

14. Mikroventil nach einem der Ansprüche 2 bis 13, **dadurch gekennzeichnet, dass** die Beschichtungsschicht (66) eine Aussparung (68) aufweist, die in der Verlängerung der Enden (541) und (561) der Mikrokanäle (54) und (56) angeordnet ist.

15. Mikroventil nach einem der vorhergehenden Ansprüche, **dadurch gekennzeichnet, dass** es ferner ein Ableitungsmittel der Gase aufweist.

16. Verfahren zum Herstellen eines Mikroventils nach einem der Ansprüche 1 bis 15, **dadurch gekennzeichnet, dass** es die folgenden Schritte aufweist:
a) Herstellen des ebenen Trägers (12, 32, 52, 72, 92), der mindestens einen zugehenden Mikrokanal (14, 34, 54, 74, 94) und mindestens einen abgehenden Mikrokanal (16, 36, 56, 76, 96) aufweist,
b) Ablagern des wärmeempfindlichen Werkstoffs (18, 40, 62, 78) durch festes Verbinden eines Films auf der Innenseite (121, 321, 521, 721, 921) des Trägers (12, 32, 52, 72, 92), so dass die Enden (141, 341, 541, 741, 941) und (161, 361, 561, 761, 961) der Mikrokanäle (14, 34, 54, 74, 94) und (16, 36, 56, 76, 96) verschlossen werden,
c) Ablagern mindestens einer leitenden Piste (20, 40, 64, 80, 100), die mindestens eine bevorzugte Erwärmungszone (201, 401, 641, 801, 100₁) zumindest zum Teil auf der Ablagerung (18, 40, 62, 78, 98) aus wärmeempfindlichem Werkstoff aufweist,
wobei die Schritte b) und c) umgekehrt werden können.

17. Verfahren nach dem vorhergehenden Anspruch, **dadurch gekennzeichnet, dass** es ferner einen Ablagerungsschritt einer Beschichtungsschicht (22, 42, 66, 82, 102) durch festes Verbinden eines Films auf dem ebenen Träger (12, 32, 52, 72, 92) aufweist.

18. Verfahren nach Anspruch 16 oder 17, **dadurch gekennzeichnet, dass** die Filme, die die Schicht aus wärmeempfindlichem Werkstoff (18, 40, 62, 78, 98) und die Beschichtungsschicht (22, 42, 66, 82, 102) bilden, fest mit dem ebenen Träger (12, 32, 52, 72, 92) durch Warm- oder Kaltwalzen, durch Kleben mit einem wärmeschmelzenden Klebstoff verbunden sind.

19. Verfahren nach einem der Ansprüche 16 bis 18, **dadurch gekennzeichnet, dass** die Ablagerung der leitenden Piste ausgeführt wird:
• durch Photogravüre der leitenden Zonen und Serigraphie oder Tampondruck der bevorzugten Erwärmungszone, oder
• durch Photolithographie der leitenden Zonen und der bevorzugten Erwärmungszone.

20. Mikrosystem, **dadurch gekennzeichnet, dass** es mindestens ein Mikroventil gemäß einem der Ansprüche 1 bis 15 aufweist oder das ausgehend von dem Verfahren gemäß den Ansprüchen 16 bis 19 erzielt wird.

21. Verfahren zum Öffnen eines Mikroventils nach einem der Ansprüche 1 bis 15, **dadurch gekennzeichnet, dass** es die folgenden Schritte aufweist:
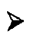 Anlegen eines elektrischen Stroms in mindestens einer leitenden Piste, die eine bevorzugte Erwärmungszone aufweist,
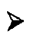 Anheben der Temperatur der bevorzugten Erwärmungszone,
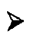 Ändern der Struktur des wärmeempfindlichen Werkstoffs in Berührung mit der bevorzugten Erwärmungszone,
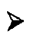 mindestens teilweises Freilegen der Enden der Mikrokanäle und des Raums zwischen diesen Letzteren, so dass die Kommunikation zwischen den Mikrokanälen hergestellt wird, und
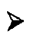 Einrichten des Fließens des Fluids.
